# EUROPEAN PATENT APPLICATION

(11) **EP 4 546 518 A1**
(43) Date of publication of application: **30.04.2025**
(21) Application number: 23215873.3
(22) Date of filing: 12.12.2023
(51) Int. Cl.: H01M 50/15, H01M 50/176, H01M 50/553, H01M 50/557, H01M 50/593

(54) **SINGLE BATTERY, BATTERY AND ELECTRICAL APPARATUS**

(30) Priority: 26.10.2023 CN 202322910945 U
(71) Applicant: AESC Japan Ltd., Yokohama-Shi, Kanagawa 220-0012 (JP)
(72) Inventor: SUN, Zhenbiao, Jiangyin City, Wuxi City, 214443 (CN); ZHENG, Haoxian, Jiangyin City, Wuxi City, 214443 (CN); CAO, Shengrong, Jiangyin City, Wuxi City, 214443 (CN)
(74) Representative: Becker, Eberhard

(57) **Abstract**

A single battery (100) includes a casing (110), a first cover plate (150), a first terminal (160), an electrode assembly (120), and a first insulating member (20). The casing (110) includes a first opening (111). The first cover plate (150) seals and is installed on the first opening (111). The first terminal (160) is installed on the first cover plate (150). The electrode assembly (120) is arranged in the casing (110) and has a first tab (121) extending from a side close to the first cover plate (150). The first tab (121) is fixedly connected to the first terminal (160) and is formed with a first tab free end (1211). The first insulating member (20) is installed on a side of the first cover plate (150) close to the electrode assembly (120). The first insulating member (20) is provided with a tab blocked structure (170). A side of the first terminal (160) close to the electrode assembly (120) and the tab blocked structure (170) form a first accommodating space (190).

## Description

### BACKGROUND

### Technical Field

The disclosure relates to the technical field of batteries, and in particular, relates to a single battery, a battery, and an electrical apparatus.

### Description of Related Art

In a currently-available battery, in order to solve the problem of contact between the tabs inside the casing and the inner wall of the casing, an insulating member and an insulating bracket are provided most of the time between the cover plate and the electrode assembly. However, there is a butt seam between the currently-available insulating member and the insulating bracket, so there is a risk that the redundant tabs inside the casing may protrude from the seam between the insulating member and the insulating bracket and contact the inner wall of the casing. The safety of the battery is thus lowered.

### SUMMARY

In view of the abovementioned shortcomings of the related art, the disclosure provides a single battery, a battery, and an electrical apparatus to improve the technical problem found in a currently-available single battery that a tab free end easily contacts an inner wall of a casing, resulting in a short circuit.

To achieve the above and other related purposes, the disclosure provides a single battery including a casing, a first cover plate, a first terminal, an electrode assembly, and a first insulating member. The casing includes a first opening. The first cover plate seals and is installed on the first opening. The first terminal is installed on the first cover plate. The electrode assembly is arranged in the casing and has a first tab extending from a side close to the first cover plate. The first tab is fixedly connected to the first terminal and is formed with a first tab free end. The first insulating member is installed on a side of the first cover plate close to the electrode assembly. The first insulating member is provided with a tab blocked structure. A side of the first terminal close to the electrode assembly and the tab blocked structure form a first accommodating space. The first accommodating space is used to limit a movable range of the first tab free end, and the casing is located outside the first accommodating space.

In the single battery according to an embodiment of the disclosure, the tab blocked structure is arranged on a front side in an extending direction of the first tab free end.

In the single battery according to an embodiment of the disclosure, the first tab includes a plurality of stacked first tab pieces, and free ends of the first tab pieces have an uneven end structure.

In the single battery according to an embodiment of the disclosure, the first insulating member includes a first insulating body and a first insulating bracket arranged between the first insulating body and the electrode assembly. The tab blocked structure is arranged on the first insulating body and/or the first insulating bracket and is configured to block the first tab free end from passing through a gap between the first insulating body and the first insulating bracket.

In the single battery according to an embodiment of the disclosure, the tab blocked structure includes a butt seam bending portion arranged on a butt position of the first insulating body and the first insulating bracket.

In the single battery according to an embodiment of the disclosure, in a thickness direction of the first cover plate, a butt seam of the butt seam bending portion is bent in a direction away from a contact surface between the first tab and the first terminal.

In the single battery according to an embodiment of the disclosure, the butt seam bending portion is located outside a movable region of the first tab free end.

In the single battery according to an embodiment of the disclosure, the butt seam bending portion includes a non-linear extending butt seam structure.

In the single battery according to an embodiment of the disclosure, the non-linear extending butt seam structure includes one or a combination of a zigzag butt seam, a wavy butt seam, and a rectangular butt seam.

In the single battery according to an embodiment of the disclosure, on a side opposite to the first tab free end, part or all of a butt seam between the first insulating body and the first insulating bracket is located outside a movable region of the first tab fee end.

In the single battery according to an embodiment of the disclosure, the tab blocked structure includes an extending portion. A root portion of the extending portion is connected to the first insulating body and/or the first insulating bracket and extending to block a front side in an extending direction of the first tab free end.

In the single battery according to an embodiment of the disclosure, an extending end of the extending portion extends beyond a movable region of the first tab free end.

In the single battery according to an embodiment of the disclosure, a recess portion is provided on the first insulating bracket or the first insulating body on a front side in an extending direction of the extending portion, and the extending end extends at least partially into the recess portion.

In the single battery according to an embodiment of the disclosure, in the extending direction of the first tab free end, the recess portion penetrates through a wall body of the corresponding first insulating body or a wall body of the corresponding first insulating bracket. The extending portion and the recess portion butt together to form a butt seam bending portion. In a thickness direction of the first cover plate, a butt seam of the butt seam bending portion is bent in a direction away from a contact surface between the first tab and the first terminal.

In the single battery according to an embodiment of the disclosure, the extending portion and/or the recess portion is provided with a plug-in guide structure for guiding the two to butt together.

In the single battery according to an embodiment of the disclosure, the plug-in guide structure includes one or a combination of a rounded corner and an inclined surface.

In the single battery according to an embodiment of the disclosure, a ratio of a minimum width W1 of the extending portion to a maximum width W2 of the first tab is 0.5 to 1.

In the single battery according to an embodiment of the disclosure, the first tab includes a plurality of stacked first tab pieces. In a thickness direction of the first cover plate, a ratio of a height H1 of the extending portion to a stacked thickness H2 of the plurality of first tab pieces ranges from 2.68 to 3.68.

In the single battery according to an embodiment of the disclosure, the extending portion extends in a planar shape. An orthographic projection of the extending portion covers an orthographic projection of the first tab free end in a direction perpendicular to the extending portion.

In the single battery according to an embodiment of the disclosure, the extending portion is provided with a draft angle to facilitate demoulding, and the draft angle ranges from 1° to 10°.

In the single battery according to an embodiment of the disclosure, the extending portion is arranged on the first insulating body. A thickness of the extending portion is greater than or equal to 0.7 mm and less than a thickness from an edge of a groove to an outer side wall of the first insulating body.

In the single battery according to an embodiment of the disclosure, the first terminal includes a bottom plate arranged on a side of the first cover plate close to the electrode assembly and welded and connected to the first tab.

In the single battery according to an embodiment of the disclosure, the single battery is a square-casing battery. The first tab free end is close to a large surface of the casing. An orthographic projection of the extending portion covers an orthographic projection of the first tab free end in a direction perpendicular to the large surface.

In the single battery according to an embodiment of the disclosure, the first insulating bracket is provided with a first tab receiving groove. In a direction perpendicular to the large surface, an orthographic projection of the first tab receiving groove covers the orthographic projection of the extending portion.

In the single battery according to an embodiment of the disclosure, the first tab is a positive tab.

In the single battery according to an embodiment of the disclosure, connection between a root portion of the extending portion and the first insulating body or the first insulating bracket includes any one of integral connection, bonding, detachable snap connection, bendable connection, and rotatable connection.

In the single battery according to an embodiment of the disclosure, the root portion of the extending portion is bent or rotatably connected to the first insulating body or the first insulating bracket.

In the single battery according to an embodiment of the disclosure, the first insulating bracket includes a tab gathering structure for gathering the first tab.

In the single battery according to an embodiment of the disclosure, the tab gathering structure includes a first protruding portion opposite to the extending portion. The first protruding portion is connected to the first insulating bracket and protrudes towards one side of the extending portion. The first tab receiving groove is formed on the side of the first protruding portion close to the first cover plate.

In the single battery according to an embodiment of the disclosure, the tab gathering structure further includes a second protruding portion arranged on a side opposite to the first protruding portion. The second protruding portion is connected to the first insulating bracket and protrudes towards one side of the first protruding portion to support the first tab free end.

In the single battery according to an embodiment of the disclosure, the casing further includes a second opening, and the second opening and the first opening are arranged on two sides of the casing opposite to each other. The single battery further includes a second cover plate sealing and installed on the second opening. The electrode assembly has a second tab extending from a side close to the second cover plate. The second tab is conductively connected to the casing, the second cover plate, or a terminal on the second cover plate.

The disclosure further provides a battery, and the battery includes the single battery according to any one of the above.

The disclosure further provides an electrical apparatus, and the electrical apparatus includes the single battery according to any one of the above.

In the single battery provided by the disclosure, the first insulating member is provided with the tab blocked structure. The side of the first terminal close to the electrode assembly and the tab blocked structure form the first accommodating space. The first accommodating space is used to limit the movable range of the first tab free end, and the casing is located outside the first accommodating space. On the one hand, the tab blocked structure prevents the first tab from contacting the casing. On the other hand, the tab blocked structure blocks the redundant first tab, so tab cutting can no longer be performed. In this way, the production costs are reduced, and the safety performance of the battery is improved.

The battery and the electrical apparatus of the disclosure include the single battery of the disclosure, so that improved safety performance is provided, and the production costs are reduced.

### BRIEF DESCRIPTION OF THE DRAWINGS

To make the technical solutions provided in the embodiments of the disclosure or the related art more clearly illustrated, several accompanying drawings required by the embodiments or the related art for description are briefly introduced as follows. Obviously, the drawings in the following description are merely some embodiments of the disclosure, and for a person having ordinary skill in the art, other drawings can be obtained based on these drawings without an inventive effort.
FIG. 1 is a schematic cross-sectional view of one side of a first cover plate in a single battery according to an embodiment of the disclosure.
FIG. 2 is a schematic view after welding of a first tab and a first terminal in the single battery is completed according to an embodiment of the disclosure.
FIG. 3 is a schematic exploded view of a first cover plate, a first insulating body, and a first insulating bracket in the single battery according to an embodiment of the disclosure.
FIG. 4 is a side view after the first cover plate, the first insulating body, and the first insulating bracket in the single battery are assembled according to an embodiment of the disclosure.
FIG. 5 is a schematic three-dimensional view of the first insulating body in the single battery according to an embodiment of the disclosure.
FIG. 6 is a schematic top view of the first insulating body in the single battery according to an embodiment of the disclosure.
FIG. 7 is a schematic top view of the first insulating bracket in the single battery according to an embodiment of the disclosure.
FIG. 8 is a schematic three-dimensional view of the first insulating bracket in the single battery according to an embodiment of the disclosure.
FIG. 9 is a schematic cross-sectional view of one side of the first cover plate in the single battery according to another embodiment of the disclosure.
FIG. 10 is a schematic view after welding of the first tab and the first terminal in the single battery is completed according to another embodiment of the disclosure.
FIG. 11 is a schematic exploded view of the first cover plate, the first insulating body, and the first insulating bracket in the single battery according to another embodiment of the disclosure.
FIG. 12 is a side view after the first cover plate, the first insulating body, and the first insulating bracket in the single battery are assembled according to another embodiment of the disclosure.
FIG. 13 is a schematic three-dimensional view of the first insulating body in the single battery according to another embodiment of the disclosure.
FIG. 14 is a top view of the first insulating body in the single battery according to another embodiment of the disclosure.
FIG. 15 is a schematic three-dimensional view of the first insulating bracket in the single battery according to another embodiment of the disclosure.
FIG. 16 is a top view of the first insulating bracket in the single battery according to another embodiment of the disclosure.
FIG. 17 is a schematic cross-sectional view of one side of the first cover plate in the single battery according to still another embodiment of the disclosure.
FIG. 18 is a schematic three-dimensional view of the first insulating body in the single battery in a first state according to still another embodiment of the disclosure.
FIG. 19 is a schematic three-dimensional view of a first cover plate assembly when the first insulating body in the single battery is in the first state according to still another embodiment of the disclosure.
FIG. 20 is a schematic three-dimensional view of the first cover plate assembly when the first insulating body in the single battery is in a second state according to still another embodiment of the disclosure.
FIG. 21 is a schematic three-dimensional view of the first cover plate assembly when the first insulating body in the single battery is in the first state according to still another embodiment of the disclosure.
FIG. 22 is a schematic cross-sectional view of one side of the first cover plate in the single battery according to still another embodiment of the disclosure.
FIG. 23 is a schematic cross-sectional view of one side of the first cover plate in the single battery according to still another embodiment of the disclosure.
FIG. 24 is a schematic three-dimensional view of the first insulating body in the single battery in the first state according to still another embodiment of the disclosure.
FIG. 25 is a schematic three-dimensional view of the first insulating body in the single battery in the second state according to still another embodiment of the disclosure.
FIG. 26 is a schematic cross-sectional view of one side of the first cover plate in the single battery according to still another embodiment of the disclosure.
FIG. 27 is a schematic cross-sectional view of one side of the first cover plate in the single battery according to still another embodiment of the disclosure.
FIG. 28 is a schematic structural view of a first tab free end in the single battery according to an embodiment of the disclosure.
FIG. 29 is a schematic structural view of a battery according to an embodiment of the disclosure.
FIG. 30 is a schematic structural view of an electrical apparatus to an embodiment of the disclosure.

### REFERENCE SIGNS LIST

1: electrical apparatus, 10: battery, 11: working portion, 101: first box body, 102: second box body, 100: single battery, 110: casing, 111: first opening, 112: large surface, 120: electrode assembly, 121: first tab, 1211: first tab free end, 130: first insulating bracket, 131: first tab receiving groove, 132: tab gathering structure, 1321: first protruding portion, 1322: second protruding portion, 133: first tab through hole, 140: first insulating body, 150: first cover plate, 151: first positioning structure, 160: first terminal, 161: bottom plate, 170: tab blocked structure, 171: extending portion, 172: recess portion, 173: butt seam bending portion, 174: plug-in guide structure, 1741: first inclined surface, 1742: second inclined surface, 180: contact surface, 190: first accommodating space, and 20: first insulating member.

### DESCRIPTION OF THE EMBODIMENTS

The implementation of the disclosure is illustrated below by specific embodiments. A person having ordinary skill in the art can easily understand other advantages and effects of the disclosure from the content disclosed in this specification. The disclosure can also be implemented or applied through other different specific implementation ways. The details in this specification can also be modified or changed based on different viewpoints and applications without departing from the spirit of the disclosure. Note that the following embodiments and the features in the embodiments may be combined with each other in the case of no conflict. It should also be understood that the terminology used in the embodiments of the disclosure is for describing a specific implementation, but not for limiting the protection scope of the disclosure. The test methods for which specific conditions are not indicated in the following embodiments are usually in accordance with conventional conditions or in accordance with the conditions suggested by each manufacturer.

When the numerical ranges are given in the embodiments, it should be understood that, unless otherwise stated in the disclosure, the two endpoints of each numerical range and any numerical value between the two endpoints may be selected. Unless otherwise defined, all technical and scientific terms used in the disclosure are consistent with the grasp of the prior art by a person having ordinary skill in the art and the content of the disclosure. Any method, device, and material in the prior art similar or equivalent to the methods, devices, and materials described in the embodiments of the disclosure may also be used to implement the disclosure.

It should be noted that terms such as "upper", "lower", "left", "right", "middle" and "one" quoted in this specification are only for the convenience of description and are not used to limit the applicable scope of the disclosure. The change or adjustment of its relative relationship should also be regarded as the applicable scope of the disclosure without substantive change of the technical content.

In a currently available single battery structure, the contact between the tabs and the casing leads to short circuit, which causes many problems. After research, designers found that the tab of the electrode assembly in a currently-available single battery extends out of a bare cell most of the time and is electrically connected to the terminal on the cover. Especially in a square-casing battery, the tab includes a plurality of tab pieces, and the tab pieces are stacked and bent and are welded and connected to the terminal on the cover plate. After welding, the redundant free ends of the plurality of tab pieces will spread out to form an uneven end structure, making it easy to contact the casing from the seam between the insulating member and the insulating bracket. When the cover plate closes the casing, in order to prevent the free ends of the redundant tab pieces from contacting the casing, an insulating member and an insulating bracket are provided most of the time between the cover plate and the electrode assembly. However, there is a butt seam between the currently-available insulating member and the insulating bracket, so after the cover plate is welded to the casing, there is a risk that the free ends of the redundant tab pieces inside the casing may protrude from the seam between the insulating member and the insulating bracket and contact the inner wall of the casing. The redundant amount of the tab pieces can be decreased by cutting the tabs, so that the risk of contact between the tab pieces and the casing is further reduced. However, on the one hand, tab cutting may increase the number of processes and reduce assembly efficiency. On the other hand, debris will be generated during the cutting process, and after the debris enters the interior of the casing, the debris will pierce the separator of the electrode assembly, thus causing an internal short circuit in the battery. The safety of the battery is thus lowered.

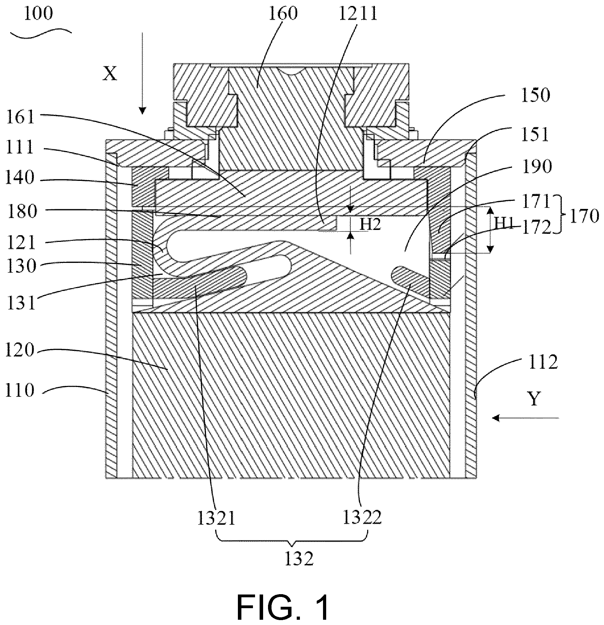

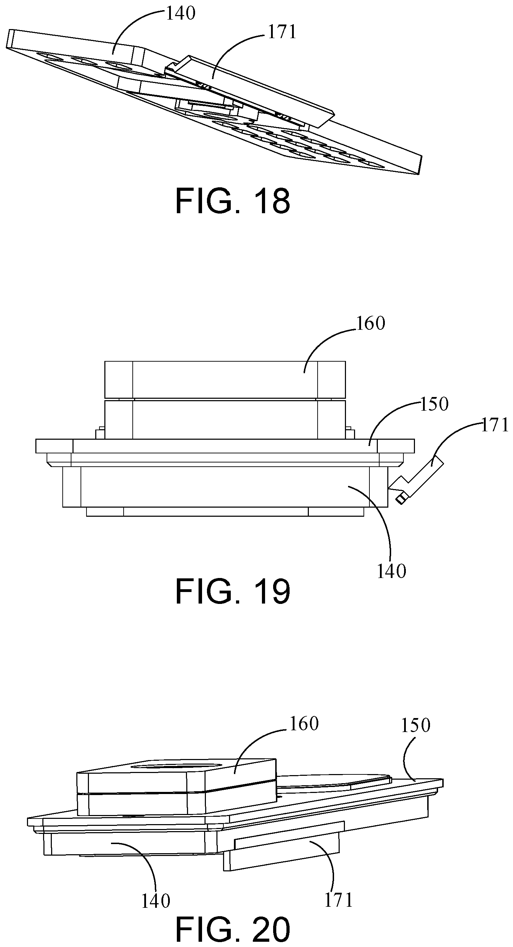

Based on the above, with reference to FIG. 1 to FIG. 27, the disclosure provides a single battery 100 first. A first insulating member 20 is provided with a tab blocked structure 170. A side of a first terminal 160 close to an electrode assembly 130 and the tab blocked structure 170 form a first accommodating space 190 used to limit a movable range of a first tab free end 1211. A casing 110 is located outside the first accommodating space 190. On the one hand, the tab blocked structure 170 may prevent a first tab 121 from contacting the casing 110. On the other hand, the tab blocked structure 170 may block the redundant first tab 121, so tab cutting can no longer be performed. In this way, the production costs are reduced, the safety performance of the battery is improved, and the technical problem found in a currently-available single battery that the tab free end easily contacts an inner wall of the casing, resulting in a short circuit, can be improved.

The single battery 100 of the disclosure may be a power battery or an energy storage battery. With reference to FIG. 1, the single battery 100 includes the casing 110, a first cover plate 150, the first terminal 160, an electrode assembly 120, a first insulating body 140, and the first insulating bracket 130.

With reference to FIG. 1, an accommodating cavity is formed in the casing 110, and one end of the accommodating cavity has a first opening 111. The accommodating cavity is used to accommodate the electrode assembly 120, electrolyte (not shown), and other components, and the first opening 111 is used to assemble the electrode assembly 120 into the accommodating cavity. It should be noted that in the disclosure, the casing 110 may be provided with the opening only at one end of the accommodating cavity or may be provided with openings at opposite ends of the accommodating cavity. The casing 110 may have various shapes, such as an approximately rectangular parallelepiped shape, an approximately cylindrical shape, an approximately prism shape, etc. The casing 110 may be made of various materials, such as copper, iron, aluminum, steel, aluminum alloy, etc. In order to prevent the casing 110 from rusting during long-term use, a surface of the casing 110 may also be coated with a layer of anti-rust material such as metal nickel.

With reference to FIG. 1, the first cover plate 150 seals and is installed on the first opening 111. A shape of the first cover plate 150 may be circular, rectangular, or other suitable shapes, as long as the first cover plate 150 may be fixedly installed on the casing 110 and seals the first opening 111. To be specific, considering an overall volume, the shape of the first cover plate 150 is preferably similar to a shape of the first opening 111. In this embodiment, the single battery 100 is a square-casing battery 10. Ignoring the rounded corners, the casing 110 has an approximately rectangular parallelepiped shape as a whole, and an approximately rectangular parallelepiped-shaped accommodating cavity is enclosed within the casing 110. One end of the accommodating cavity has the approximately rectangular first opening 111. The shape of the first cover plate 150 is similar to the shape of the first opening 111, and the first cover plate 150 has a first positioning structure 151 matching an inner wall and an end wall of the first opening 111. The first positioning structure 151 may be any suitable structure type that can be matched and positioned with the first opening 111. In this embodiment, the first positioning structure 151 includes a boss protruding into the first opening 111 and abutting against the inner wall of the first opening 111. Through the first positioning structure 151, the first cover plate 150 may be quickly positioned and installed on the first opening 111 and may exhibit good stability during the further welding or sealing and bonding process between the first cover plate 150 and the casing 110. Certainly, a person having ordinary skill in the art can understand that the abovementioned first positioning structure 151 may not have to be provided.

The electrode assembly 120 is a component in a cell where electrochemical reactions occur. One or a plurality of electrode assemblies 120 may be included within the casing 110. The electrode assembly 120 is mainly formed by winding or laminating a positive electrode sheet and a negative electrode sheet, and a separator is usually provided between the positive electrode sheet and the negative electrode sheet. The positive electrode sheet includes a positive electrode current collector and a positive electrode active material layer, and the positive electrode active material layer is coated on a surface of the positive electrode current collector. The positive electrode current collector includes a positive electrode coating region and a positive tab connected to the positive electrode coating region. The positive electrode coating region is coated with the positive electrode active material layer, and the positive tab is not coated with the positive electrode active material layer. The negative electrode sheet includes a negative electrode current collector and a negative electrode active material layer, and the negative electrode active material layer is coated on a surface of the negative electrode current collector. The negative electrode current collector includes a negative electrode coating region and a negative tab connected to the negative electrode coating region. The negative electrode coating region is coated with the negative electrode active material layer, and the negative tab is not coated with the negative electrode active material layer. Taking a lithium-ion battery as an example, a material of the positive electrode current collector may be aluminum. The positive active material layer includes a positive active material, and the positive active material may be lithium cobalt oxide, lithium iron phosphate, ternary lithium, or lithium manganate. A material of the negative electrode current collector may be copper. The negative active material layer includes a negative active material, and the negative active material may be carbon or silicon. A material of the separator may be polypropylene (PP) or polyethylene (PE), etc. In order to protect and insulate the cell, the cell may also be externally covered with an insulating film, and the insulating film may be made of PP, PE, PET, PVC, or other polymer materials.

With reference to FIG. 1, the electrode assembly 120 is accommodated in the casing 110 and has the first tab 121 extending from a side close to the first cover plate 150. The first tab 121 is fixedly and conductively connected to the first terminal 160, and an end of the first tab 121 outside a connection position forms the first tab free end 1211. The first tab 121 may be the abovementioned positive tab or the abovementioned negative tab, which is not particularly limited herein. In this embodiment, the first tab 121 is a positive tab. The first terminal 160 is fixedly installed on the first cover plate 150 and is insulated from the first cover plate 150. One end of the first terminal 160 away from the electrode assembly 120 is exposed outside the first cover plate 150 and is used to form an externally connected electrode. One end of the first terminal 160 close to the electrode assembly 120 penetrates the first cover plate 150 and is electrically connected to the first tab 121. Methods of conductive connection include but are not limited to conductive welding, conductive bonding, etc. To be specific, in the single battery 100 provided in the embodiments, the first terminal 160 includes a bottom plate 161, and the bottom plate 161 is arranged on a side of the first cover plate 150 close to the electrode assembly 120 and is welded and connected to the first tab 121.

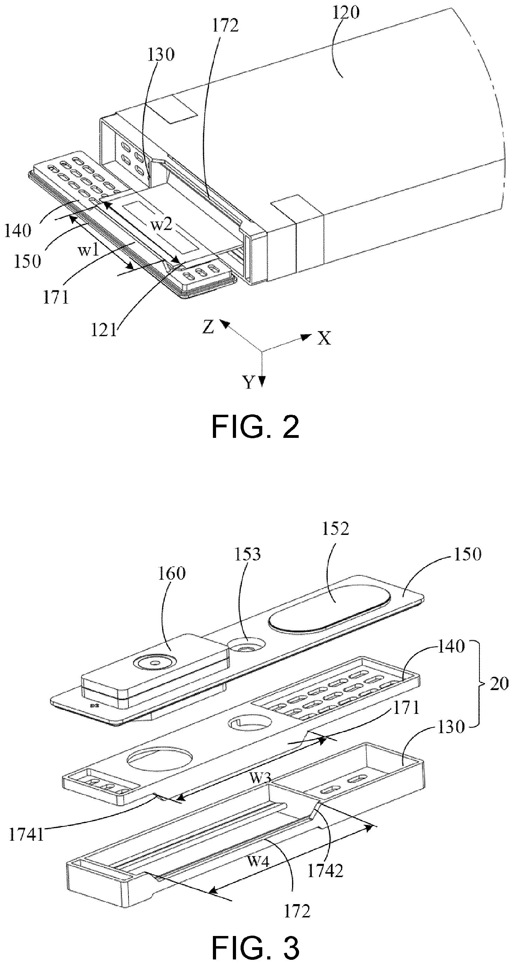

With reference to FIG. 1 and FIG. 3, the first insulating member 20 is arranged on a side of the first cover plate 150 close to the electrode assembly 130 and is provided with the tab blocked structure 170. The side of the first terminal 160 close to the electrode assembly 130 and the tab blocked structure 170 form the first accommodating space 190 used to limit the movable range of the first tab free end 1211. The casing 110 is located outside the first accommodating space 170. In such an arrangement, on the one hand, the first accommodating space 190 is isolated from the casing 110 through the tab blocked structure 170, and the first tab 121 is prevented from contacting the casing 110. On the other hand, the tab blocked structure 170 may block the redundant first tab 121, so tab cutting can no longer be performed. In this way, the production costs are reduced, and the safety performance of the battery is improved.

With reference to FIG. 1 and FIG. 3, in the single battery according to an embodiment of the disclosure, the first cover plate 20 includes the first insulating body 140 and the first insulating bracket 130. The first insulating bracket 130 is arranged between the first insulating body 140 and the electrode assembly 120. The tab blocked structure 170 is arranged on the first insulating body and/or the first insulating bracket and located on a front side in an extending direction of the first tab free end 1211. The tab blocked structure 170 is configured to block the first tab free end 1211 from passing through a gap between the first insulating body 140 and the first insulating bracket 130.

With reference to FIG. 1 to FIG. 6, the first insulating member 140 is arranged on the side of the first cover plate 150 close to the electrode assembly 120. The structure and installation method of the first insulating body 140 are not limited. For instance, the structure and installation method of lower plastic of the currently-available single battery 100 may be referred to, but it is not limited thereto. In this embodiment, the first terminal 160 penetrates through the first cover plate 150 and the first insulating body 140. The first insulating body 140 is press-fitted on the side of the first cover plate 150 close to the electrode assembly 120 through the bottom plate 161 on the first terminal 160. The first insulating body 140 may be made of any suitable insulating material type, including but not limited to rubber and plastic.

With reference to FIG. 1 to FIG. 3 and FIG. 7 to FIG. 8, the first insulating bracket 130 is arranged inside the casing 110 between the first insulating body 140 and the electrode assembly 120 to support the electrode assembly 120. The first insulating bracket 130 specifically includes a first tab through hole 133 corresponding to a position of the first tab 121. The first tab 121 extends through the first tab through hole 133 and is conductively welded and connected to the bottom plate 161 of the first terminal 160. A material of the first insulating bracket 130 includes but not limited to rubber and plastic.

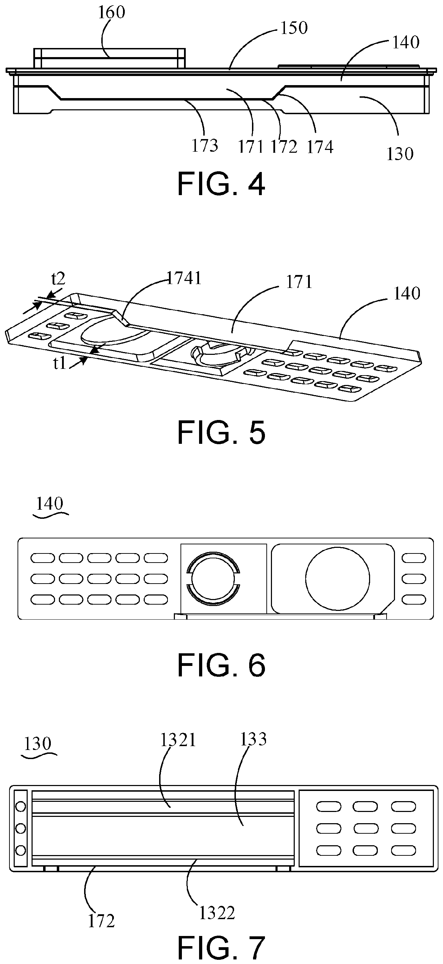

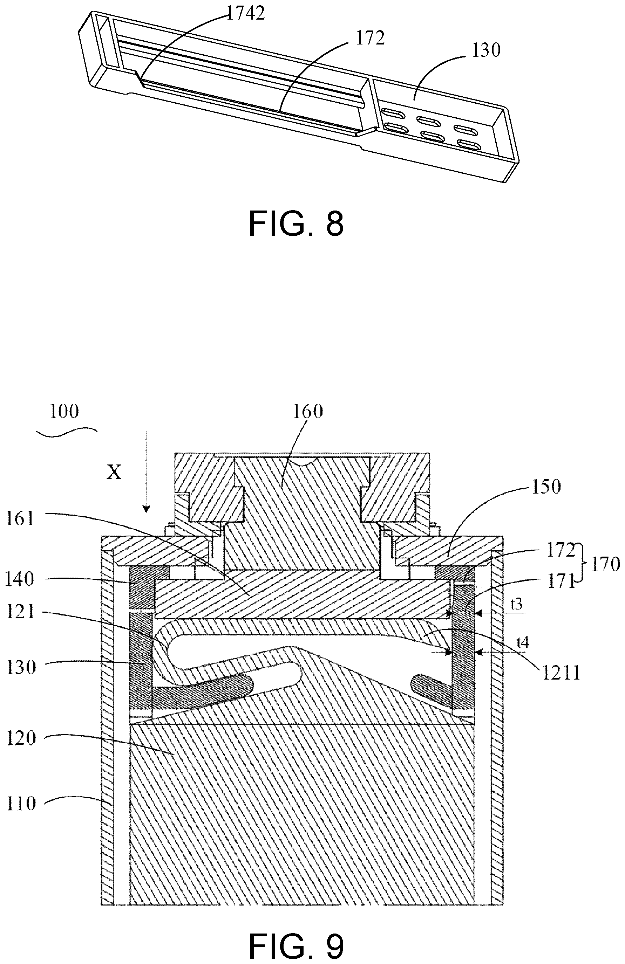

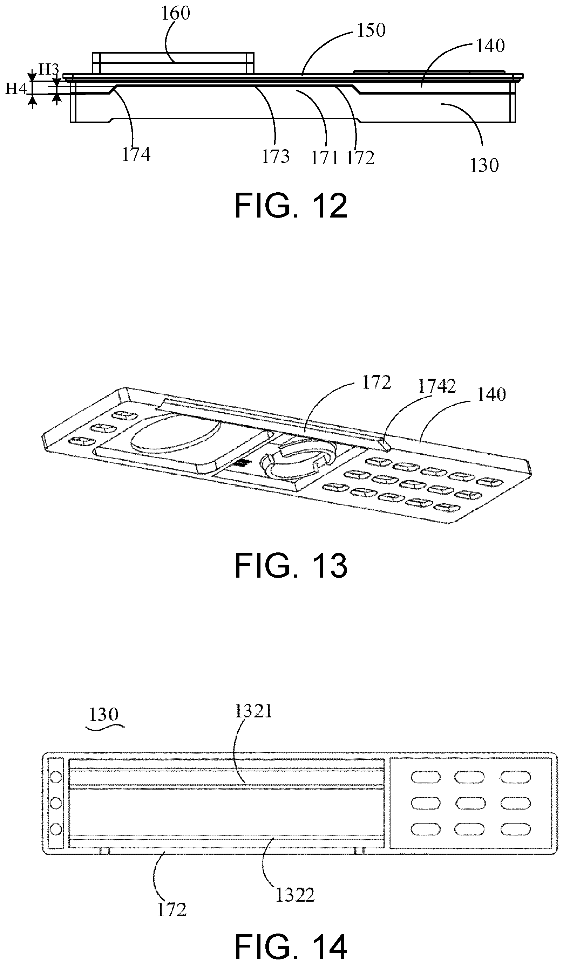

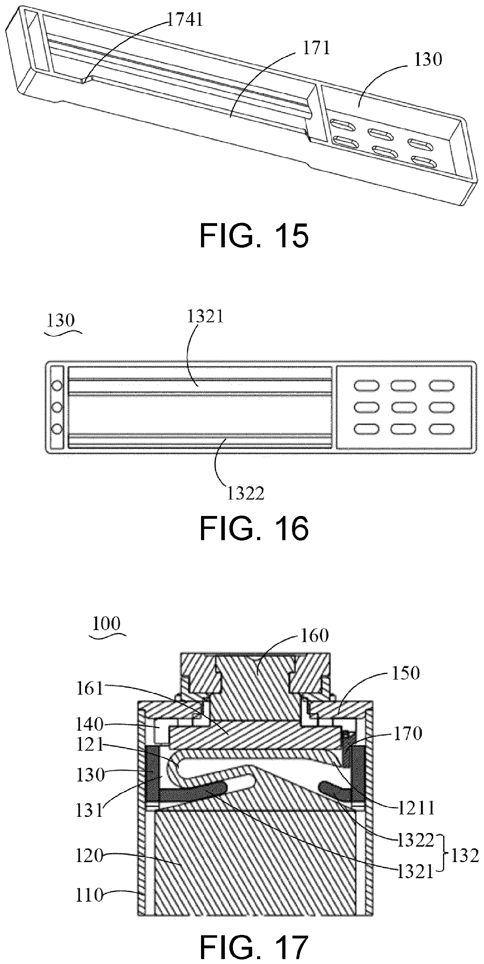

With reference to FIG. 1 and FIG. 9, in the single battery 100 of the disclosure, the first insulating body 140 and/or the first insulating bracket 130 is provided with the tab blocked structure 170 arranged on the front side in the extending direction of the first tab free end 1211 (i.e., the direction opposite to the Y direction in FIG. 1) and is configured to block the first tab free end 1211 from passing through a seam between the first insulating body 140 and the first insulating bracket 130. It should be noted that the tab blocked structure 170 may be provided only on the first insulating body 140 or the first insulating bracket 130 or may be provided on both the first insulating body 140 and the first insulating bracket 130, so that the two may block the first tab free end 1211 together. The tab blocked structure 170 may be any suitable structure that can block the first tab free end 1211 and prevent the first tab free end 1211 from passing through the seam between the first insulating body 140 and the first insulating bracket 130. For instance, as shown in FIG. 17, FIG. 22, and FIG. 23, an overlapping region is formed on the first insulating body 140 and the first insulating bracket 130 on the front side in the extending direction of the first tab free end 1211 to cover or seal the seam between the first insulating body 140 and the first insulating bracket 130. For another instance, as shown in FIG. 4 and FIG. 12, a butt seam bending portion 173 and the like are provided at a butt seam position between the first insulating body 140 and the first insulating bracket 130 on the front side in the extending direction of the first tab free end 1211, but it is not limited thereto. On the one hand, the tab blocked structure 170 may prevent the first tab free end 1211 from passing through the seam between the first insulating body 140 and the first insulating bracket 130 and prevent the first tab 121 from contacting the casing 110. On the other hand, an extending portion 171 can block redundant first tab pieces, and tab cutting can no longer be performed. In this way, the production costs are reduced, and the safety performance of the battery 10 is improved.

With reference to FIG. 2, FIG. 4, and FIG. 12, in the single battery 100 according to an embodiment of the disclosure, the blocking structure includes the butt seam bending portion 173 provided at the butt position between the first insulating body 140 and the first insulating bracket 130. Considering that an end surface of the first tab free end 1211 mostly extends along a straight line in a width direction of the first tab 121 (i.e., in the Z direction in FIG. 2), a person having ordinary skill in the art can understand that within a width range corresponding to the first tab free end 1211, the butt seam on the front side in the extending direction of the first tab free end 1211 is bent, so the butt seam bending portion 173 is formed. That is, compared with the original planar butt seam structure, the effect of blocking the first tab free end 1211 from protruding can be produced.

With reference to FIG. 1 and FIG. 4, in the single battery 100 according to an embodiment of the disclosure, in a thickness direction of the first cover plate 150 (i.e., the X direction in FIG. 1), a butt seam of the butt seam bending portion 173 is bent in a direction away from a contact surface 180 between the first tab 121 and the first terminal 160. As long as the butt seam can be further away from the contact surface 180 between the first tab 121 and the first terminal 160 than the original butt seam, the form of the butt seam bending portion 173 is not particularly limited. For instance, as shown in FIG. 9 and FIG. 12, the butt seam is bent towards the first cover plate 150. Alternatively, as shown in FIG. 1 and FIG. 4, the butt seam is bent towards the side away from the first cover plate 150. The butt seam may be bent in an arc shape, may be bent in a zigzag shape, or may be bent in an approximately trapezoidal shape, but it is not limited thereto.

As long as the butt seam is bent in a corresponding region on the front side in the extending direction of the first tab free end 1211, the bent butt seam may prevent the first tab free end 1211 from penetrating. However, preferably, in the single battery 100 according to an embodiment of the disclosure, the butt seam bending portion 173 is located outside a movable region of the first tab free end 1211. The movable region of the first tab free end 1211 may be determined comprehensively through the design size, welding position, and gravity, or may also be determined through drawing, which is not limited herein. In the embodiment, by arranging the butt seam bending portion 173 located on the front side in the extending direction of the first tab free end 1211 outside the movable region of the first tab free end 1211, the possibility of the first tab free end 1211 passing through the butt seam between the first insulating body 140 and the first insulating bracket 130 may be considerably reduced or completely eliminated.

In some other embodiments of the single battery 100 provided by the disclosure, the butt seam bending portion 173 includes a non-linear extending butt seam structure. The non-linear extending butt seam structure is at least partially located within the width range corresponding to the first tab free end 1211. The non-linear extending butt seam structure may be one or a combination of a zigzag butt seam, a wavy butt seam, and a rectangular butt seam. When the approximately planar first tab free end 1211 extends to the non-linear extending butt seam structure, a labyrinth-like gap structure formed by the non-linear extending butt seam blocks the approximately straight-shaped first tab free end 1211 to reduce the probability of the first tab free end 1211 drilling out of the butt seam. In order to better prevent the first tab free end 1211 from drilling out of the non-linear extending butt seam structure, on the side opposite to the first tab free end 1211, part or all of the butt seam between the first insulating body 140 and the first insulating bracket 130 may be located outside the movable region of the first tab fee end 1211.

With reference to FIG. 1 and FIG. 9, in the single battery 100 according to an embodiment of the disclosure, the blocking structure includes the extending portion 171. A root portion of the extending portion 171 is connected to the first insulating body 140 and/or the first insulating bracket 130 and extends to block the front side in the extending direction of the first tab free end 1211. A shape of the extending portion 171 may be a trapezoid shape, a rectangle shape, a tongue shape, etc., but is not limited thereto. By providing the extending portion 171 on the front side in the extending direction of the first tab free end 1211, on the one hand, the extending portion 171 may prevent the first tab free end 1211 from keeping on moving forward to contact the casing 110. On the other hand, the extending portion 171 can block redundant first tab 121, and tab cutting can no longer be performed. In this way, the production costs are reduced, and the safety performance of the battery 10 is improved.

To be specific, with reference to FIG. 1 to FIG. 6, in an embodiment, the root portion of the extending portion 171 is connected to the first insulating body 140, and such a connection includes but not limited to integral connection, bonding, etc. An extending end of the extending portion 171 extends towards a side of the first insulating bracket 130, forming a shape protruding towards the first insulating bracket 130 and blocking the front side in the extending direction of the first tab free end 1211.

With reference to FIG. 9 to FIG. 16, in another embodiment, the root portion of the extending portion 171 is connected to the first insulating bracket 130, and such a connection includes but not limited to integral connection, bonding, etc. The extending end of the extending portion 171 extends towards a side of the first insulating body 140, and the extending portion 171 protrudes towards the first insulating body 140 and blocks the front side in the extending direction of the first tab free end 1211. However, a person having ordinary skill in the art can understand that in other embodiments, extending portions 171 may be provided on both the first insulating body 140 and the first insulating bracket 130, and the plurality of extending portions may be arranged and combined in the width direction of the first tab 121 or in the extending direction of the first tab free end 1211 to block the first tab free end 1211 together.

In order to obtain a favorable blocking effect, in this embodiment, the extending end of the extending portion 171 extends beyond the movable region of the first tab free end 1211. Such an arrangement can greatly reduce the probability of the penetration by the first tab free end 1211 and can even eliminate the possibility of contact between the first tab free end 1211 and the casing 110.

With reference to FIG. 1, in the single battery 100 according to an embodiment of the disclosure, a corresponding recess portion 172 is arranged on the first insulating body 140 (or the first insulating bracket 130 in FIG. 9) on a front side in an extending direction of the extending portion 171. Preferably, a depth of the recess portion 172 shall be slightly greater than a height of the extending portion 171 to avoid assembly interference. The extending end of the extending portion 171 at least partially extends into the recess portion 172. A shape of the recess portion 172 is matched with the shape of the extending portion 171. For instance, when the extending portion 171 is trapezoidal, the recess portion 172 is also trapezoidal, and the extending portion 171 and the recess portion 172 butt together to form an approximately trapezoidal butt seam with an opening. It should be noted that when the extending portion 171 is trapezoidal, it needs to meet the requirements of being able to be inserted into the recess portion 172 and matched with a side wall and a bottom wall of the recess portion 172. For instance, the shape of the extending portion 171 may be an isosceles trapezoid with an upper bottom close to the recess portion 172, a right-angled trapezoid with an upper bottom close to the recess portion 172, or an ordinary trapezoidal structure that can be inserted into the recess portion 172 along a straight line. Further, providing the recess portion 172 matched the extending portion 171, on the one hand, may allow a matching convex-concave structure to be formed between the first insulating body 140 and the first insulating bracket 130, so that the overall space occupied by the first insulating body 140 and the first insulating bracket 130 within the casing 110 does not change. On the other hand, the butt seam between the first insulating body 140 and the first insulating bracket 130 on the front side in the extending direction of the first tab free end 1211 may also be moved further away or even outside the movable region of the first tab free end 1211. In this way, the possibility of the first tab free end 1211 drilling out of the seam between the first insulating body 140 and the first insulating bracket 130 may be lowered.

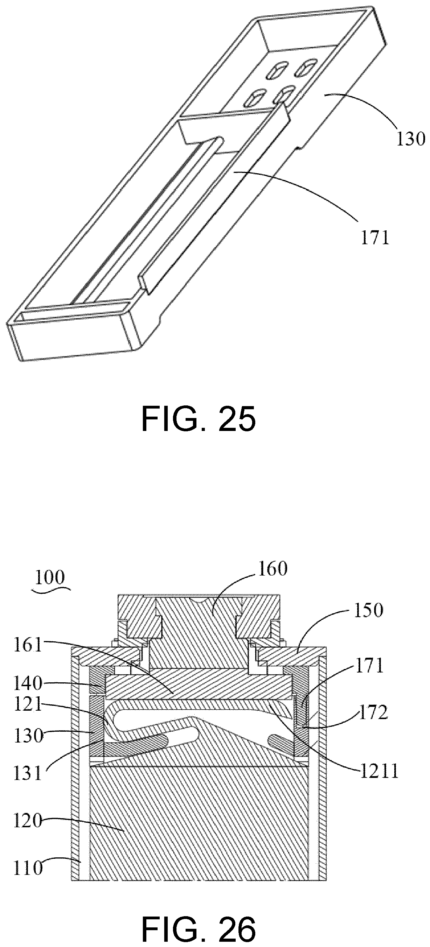

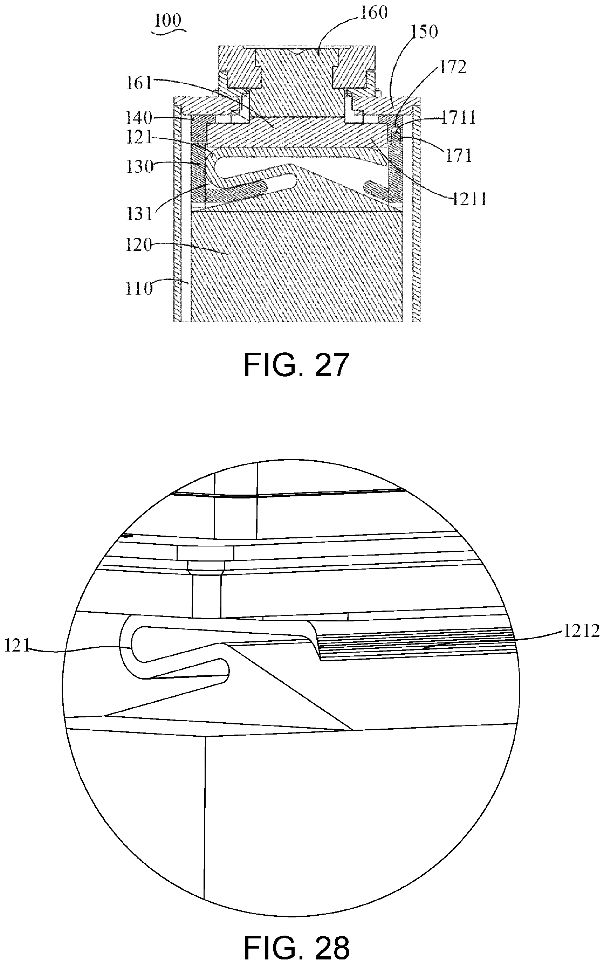

With reference to FIG. 26 and FIG. 27, in the disclosure, the recess portion 172 may be a groove-shaped structure provided inside a wall body of the first insulating body 140 or a wall body of the first insulating bracket 130. In this groove structure, the recess portion 172 only penetrates through the wall body of the first insulating body 140 or the wall body of the first insulating bracket 130 on the side corresponding to the extending portion 171, so that an opening for the extending portion 171 to be inserted is formed. In this case, the extending portion 171 and the recess portion 172 form a plug-in relationship. In a height direction of the first cover plate 150, no seam is formed between the first insulating body 140 and the first insulating bracket 130 on the front side of the extending direction of the extending portion 171, so that the first tab free end 1211 may be effectively prevented from contacting the casing 110.

With reference to FIG. 1, FIG. 4, FIG. 9, and FIG. 12, considering wall thicknesses of the first insulating body 140 and the first insulating bracket 130, in the single battery 100 according to an embodiment of the disclosure, in the extending direction of the first tab free end 1211, the recess portion 172 penetrates through the wall body of the corresponding first insulating body 140 or the wall body of the corresponding first insulating bracket 130. The extending portion 171 and the recess portion 172 butt together to form the butt seam bending portion 173. In the thickness direction of the first cover plate 150, a butt seam of the butt seam bending portion 173 is bent in a direction away from a contact surface between the first tab 121 and the first terminal 160. In this embodiment, the first tab 121 is welded to the bottom plate 161 of the first terminal 160, so the first tab free end 1211 is close to the contact surface 180 between the first tab 121 and the first terminal 160. Bending the butt seam of the butt seam bending portion 173 in a direction away from the contact surface 180 between the first tab 121 and the first terminal 160 can reduce the probability that the first tab free end 1211 reaches the butt seam, so that the risk of contact between the first tab free end 1211 and the casing 110 may be lowered at least to a certain extent.

With reference to FIG. 4, in the single battery 100 according to an embodiment of the disclosure, the extending portion 171 and/or the recess portion 172 is provided with a plug-in guide structure 174 for guiding the two to butt together. The plug-in guide structure 174 may be arranged only on the extending portion 171, may be arranged only on the recess portion 172, or may be arranged on both the extending portion 171 and the recess portion 172, so that the two may be matched with each other to achieve plugging-in and guiding. The plug-in guide structure 174 may be of various types. For instance, the plug-in guide structure may form an inclined surface or a rounded corner at a notch of the recess portion 172 to guide the extending portion 171 to enter, or the plug-in guide structure may be an inclined surface provided on a side wall of the recess portion 172, and the inclined surface may make the recess portion 172 form a structure with a wide notch and a narrow bottom. Alternatively, the plug-in guide structure may be an inclined surface or a rounded corner arranged on a free end of the extending portion 171, or the plug-in guide structure may be an inclined surface arranged on the extending portion 171, and the inclined surface may cause the extending portion 171 to form a wedge-shaped structure with a narrower free end and a wider root portion. Alternatively, various combinations of the above may be provided on the recess portion 172 and the extending portion 171 together.

To be specific, with reference to FIG. 3 to FIG. 8, in an embodiment, the root portion of the extending portion 171 is connected to the first insulating body 140. The first insulating bracket 130 is provided with the recess portion 172 matched with the extending portion 171, and the extending portion 171 is approximately trapezoidal in shape. The plug-in guide structure 174 includes first inclined surfaces 1741 provided on both sides of the extending portion 171 and second inclined surfaces 1742 provided on both sides of the recess portion 172 and matched with the first inclined surfaces 1741. The two first inclined surfaces 1741 and the two second inclined surfaces 1742 are matched and butt together. An upper bottom of the extending portion 171 and a bottom portion of the recess portion 172 butt together to form an approximately trapezoidal butt seam shape with a lower bottom missing.

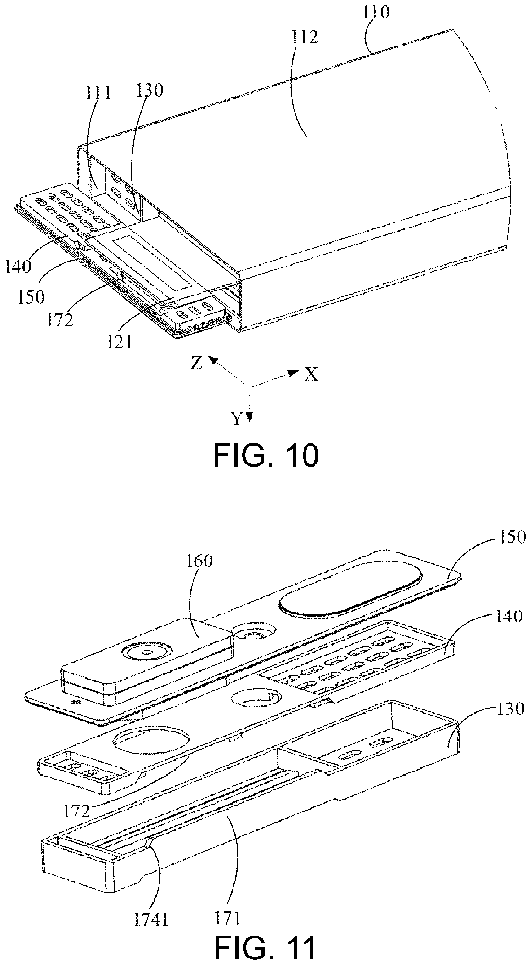

With reference to FIG. 11 to FIG. 16, in another embodiment of the disclosure, the root portion of the extending portion 171 is connected to the first insulating bracket 130. The first insulating body 140 is provided with the recess portion 172 matched with the extending portion 171, and the extending portion 171 is approximately trapezoidal in shape. The plug-in guide structure 174 includes the first inclined surfaces 1741 provided on both sides of the extending portion 171 and the second inclined surfaces 1742 provided on both sides of the recess portion 172 and matched with the first inclined surfaces 1741. The two first inclined surfaces 1741 and the two second inclined surfaces 1742 are matched and butt together. The upper bottom of the extending portion 171 and the bottom portion of the recess portion 172 butt together to form a trapezoidal butt seam shape with a lower bottom missing.

A person having ordinary skill in the art can understand that the first inclined surfaces 1741 are provided only on one side of the abovementioned extending portion 171, and the other side is a straight surface, so that the extending portion 171 in the shape of a right-angled trapezoid is formed. Arrangement of the matching second inclined surfaces 1742 at positions corresponding to the first inclined surfaces 1741 in the recess portion 172 may also guide the extending portion 171 to be inserted. Alternatively, the extending end of the extending portion 171 is provided with an arc-shaped structure, so that the extending portion 171 and the recess portion 172 may also be guided to butt together.

With reference to FIG. 1, in the disclosure, regarding the extending portion 171 and the single-piece first tab 121, the risk of the first tab free end 1211 protruding from the seam is lowered. With reference to FIG. 28, in the single battery according to an embodiment of the disclosure, the first tab 121 includes a plurality of stacked first tab pieces 1212, and free ends of the first tab pieces 1212 have an uneven end structure. Further, in the thickness direction of the first cover plate 150, a ratio of a height H1 of the extending portion 171 to a stacked thickness H2 of the plurality of first tab pieces 1212 ranges from 2.68 to 3.68. However, when the ratio of H1 to H2 is less than 2.68, there is still a risk that the first tab 121 drills out from the seam between the first insulating body 140 and the first insulating bracket 130. When the ratio of H1 to H2 is greater than 3.68, the recess portion 172 is excessively deep, and the stability of the first insulating body 140 or the first insulating bracket 130 where the recess 172 is located may be affected. According to the current structure of the square-casing single battery 100, the height H1 from the extending end of the extending portion 171 to the contact surface 180 between the first terminal 160 and the first tab 121 is generally 2 mm to 3 mm and is 2.6 mm in this embodiment.

Although the structure in the disclosure may be applied to various types of single batteries 100 with cover plates, with reference to FIG. 1 and FIG. 10, in the single battery 100 according to an embodiment of the disclosure, the single battery 100 is the square-casing battery 10. The first tab free end 1211 is close to a large surface 112 of the casing 110. An orthographic projection of the extending portion 171 covers an orthographic projection of the first tab free end 1211 in a direction perpendicular to the large surface 112 (i.e., the direction Y in FIG. 1). This arrangement enables the extending portion 171 to cover as much of the movable region of the first tab free end 1211 as possible, so that a favorable blocking effect is achieved.

With reference to FIG. 1 and FIG. 9, in some embodiments of the disclosure, the extending portion 171 arranged on the first insulating body 140 and/or the first insulating bracket 130 has a draft angle, and the draft angle ranges from 1° to 10°. The extending portion 171 gradually becomes thinner from the extending end to the root portion of the extending portion 171 under the effect of the draft angle. The draft angle range of 1° to 10° not only facilitates the overall demoulding of the first insulating body 140, but also prevents a thickness of the extending portion 171 from changing excessively from the root portion to the free end resulting in insufficient hardness of the extending portion 171.

With reference to FIG. 2, in the single battery 100 according to an embodiment of the disclosure, the extending portion 171 is trapezoidal, and a ratio of a width w1 of a short side of the extending portion to a width w2 of the first tab 121 is 0.5 to 1. If the ratio of w1 to w2 is less than 0.5, the blocking effect produced by the extending portion 171 on the first tab free end 1211 is not obvious. If the ratio of w1 to w2 is greater than 1, a weight of the first insulating body 140 or the first insulating bracket 130 may increase, and a length of the recess portion 172 on the first insulating bracket 130 or the first insulating body 140 opposite to the extending portion 171 may also increase, so the strength of the first insulating bracket 130 may be reduced.

With reference to FIG. 3, in the single battery 100 according to an embodiment of the disclosure, the extending portion 171 is arranged on the first insulating body 140. A length w3 of the root portion of the extending portion 171 is 1 mm to 2 mm greater on one side than a length w4 of an opening of the recess portion 172 of the first insulating bracket 130. Under such an arrangement, the seam between the two may be made smaller without causing assembly difficulties due to errors.

Although the structure in the disclosure may be applied to various types of single batteries 100 with cover plates, in the single battery 100 according to an embodiment of the disclosure, the single battery 100 is the square-casing battery 10. The first tab free end 1211 extends in the direction opposite to the Y direction in FIG. 1 to be close to the large surface 112 of the casing 110. The orthographic projection of the extending portion 171 covers the orthographic projection of the first tab free end 1211 in the direction perpendicular to the large surface 112, and such an arrangement provides a favorable blocking effect.

With reference to FIG. 1, in the single battery 100 according to an embodiment of the disclosure, the first insulating bracket 130 is provided with a first tab receiving groove 131. In the direction perpendicular to the large surface 112, an orthographic projection of the first tab receiving groove 131 covers the orthographic projection of the extending portion 171. To be specific, in the direction perpendicular to the large surface 112 (i.e., the direction Y in FIG. 1), a length of an orthogonal projection of the root portion of the extending portion 171 is greater than a length of an orthogonal projection of the bottom plate 161 of the first terminal 160 and is less than a length of the orthogonal projection of the first tab receiving groove 131. When the length of the orthographic projection of the root portion of the extending portion 171 is greater than the length of the bottom plate 161 of the first terminal 160, the first tab free end 1211 may be well blocked. When the length of the orthographic projection of the extending portion 171 is less than the length of the first tab receiving groove 131, the assembly difficulty may be lowered. Considering the size of the currently-available battery 10, preferably, the length of the root portion of the orthographic projection of the extending portion 171 is 26 to 50 mm, for example, it can be 26 mm, 35 mm, and 50 mm, but is not limited thereto, and is 45 mm in this embodiment.

With reference to FIG. 1, FIG. 3, FIG. 4, and FIG. 5, in the single battery 100 according to an embodiment of the disclosure, the extending portion 171 is arranged on the first insulating body 140, and the recess portion 172 is arranged on the first insulating bracket 130. The root portion of the extending portion 171 is connected to the first insulating body 140, and such a connection includes but not limited to integral connection, bonding, rotational connection, detachable snap connection, etc. The extending end of the extending portion 171 extends towards one side of the electrode assembly 120 and is inserted into the recess portion 172 on the first insulating bracket 130, so that the trapezoidal butt seam bending portion 173 is formed. Taking into account the size specifications of the currently-available square-casing single battery 100, a thickness t2 (if the draft angle is provided, it is the thickness of the root portion of the extending portion 171) of the extending portion 171 is preferably greater than or equal to 0.7 mm and less than or equal to a thickness t1 (i.e., the thickness from an edge of a groove to an outer side wall of the first insulating body 140) of a side wall of the first insulating body. When the thickness t2 of the extending portion 171 is less than 0.7 mm, the hardness of the extending portion 171 is likely to be insufficient and cannot block the first tab pieces 1212. If t2 is greater than t1, the overall weight of the first insulating body 140 may increase, and the lateral space utilization of the single battery 100 may be reduced.

With reference to FIG. 9 and FIG. 12, in the single battery 100 according to an embodiment of the disclosure, the extending portion 171 is arranged on the first insulating bracket 130. The root portion of the extending portion 171 is connected to the first insulating bracket 130, and such a connection includes but not limited to integral connection, bonding, and rotational connection. The free end of the extending portion 171 extends towards one side of the first cover plate 150 and extends into the recess portion 172 on the first insulating body 140, so that the trapezoidal butt seam bending portion 173 is formed. A ratio of a thickness t3 of the root portion of the extending portion 171 to a wall thickness t4 of the first insulating bracket 130 is 0.7 to 1.3. Considering the specifications of the currently-available single batteries, in this embodiment, the thickness t3 of the root portion of the extending portion 171 is 1.25 mm. When the ratio of the thickness t3 of the extending end of the extending portion 171 to the wall thickness t4 of the first insulating bracket 130 is less than 0.4, the hardness of the extending portion 171 is likely to be insufficient and cannot block the first tab 121. When the ratio of the thickness t3 of the extending end of the extending portion 171 to the wall thickness t4 of the first insulating bracket 130 is greater than 0.6, the contact area between the first insulating body 140 and the first insulating bracket 130 may increase, making assembly more difficult and reducing structural stability. Considering the related structures and sizes of the currently-available first insulating bracket 130 and the first insulating body 140, preferably, a height H3 of the extending portion 171 is 1 mm to 1.8 mm, for example, it can be 1 mm, 1.3 mm, 1.5 mm, or 1.8 mm, but is not limited thereto. A ratio of the height H3 of the extending portion 171 to a height H4 of the first insulating body 140 is 0.45 to 0.8. When the ratio of the height H3 of the extending portion 171 to the height H4 of the first insulating body 140 is less than 0.45, there is still a risk that the first tab 121 drills out of the seam between the first insulating body 140 and the insulating bracket. When the ratio of the height H3 of the extending portion 171 to the height H4 of the first insulating body 140 is greater than 0.8, although the first tab 121 is prevented from drilling out of the seam, the overall weight of the cell may increase.

With reference to FIG. 17 to FIG. 20, in the single battery 100 according to another embodiment of the disclosure, the root portion of the extending portion 171 may be bent or rotatably connected to the first insulating body 140. The first insulating bracket 130 is not provided with the recess portion 172. The extending portion 171 extends to the inside of the side wall of the first insulating bracket 130 and blocks the front side in the extending direction of the first tab free end 1211. The bendable connection structure includes but not limited to providing a relatively soft connection belt at the root portion of the extending portion 171 or setting the extending portion 171 as a bendable material with a specific hardness. The rotatable connection structure includes but not limited to a matching structure of a rotating shaft and a groove. For instance, a fixed or rotating shaft is provided on the extending portion 171, a groove matched with the shaft is provided on the first insulating body 140, and the shaft is inserted into the groove to achieve rotation. Alternatively, a fixed or rotating shaft may be provided on the first insulating body 140, a groove matched with the shaft may be provided at the root portion of the extending portion 171, and the shaft may be inserted into the groove to achieve rotation. In this way, before the first cover plate 150 seals and is assembled with the casing 110, the extending portion 171 may first be in a first state of being flipped over or bent outwards, thereby providing sufficient space for welding of the first tab 121 and the first terminal 160. When the welding is completed and it is necessary to rotate the first cover plate 150 to seal the first cover plate 150 on the first opening 111, the extending portion 171 may be turned over or bent to a second state that is approximately perpendicular to a plate surface of the first cover plate 150. Therefore, the extending portion 171 may be inserted into the inside of the side wall of the first insulating bracket 130 during the turning process to block the seam between the first insulating body 140 and the first insulating bracket 130.

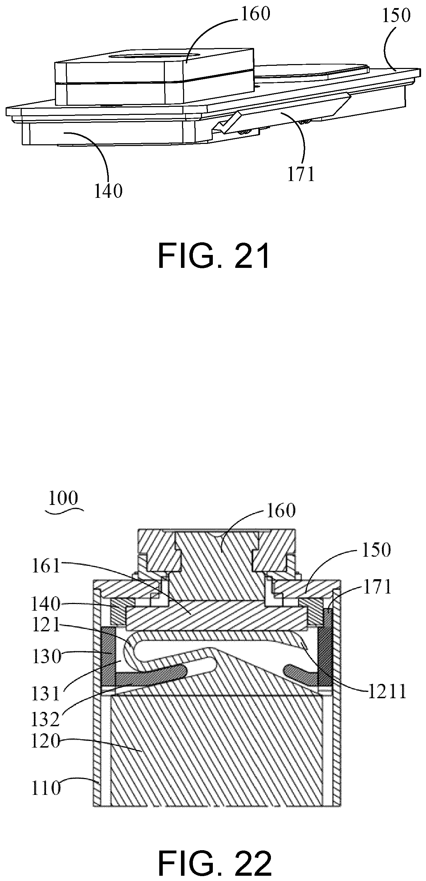

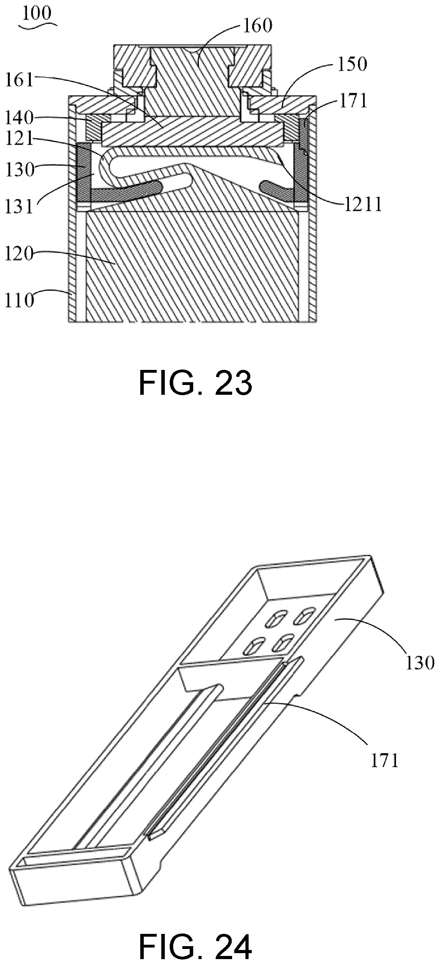

With reference to FIG. 23 to FIG. 25, in the single battery 100 according to another embodiment of the disclosure, the root portion of the extending portion 171 may be bent or rotatably connected to the first insulating bracket 130. The bendable connection structure includes but not limited to providing a relatively soft connection belt at the root portion of the extending portion 171 or setting the extending portion 171 as a bendable material with a specific hardness. The rotatable connection structure includes but not limited to the matching structure of the rotating shaft and the groove. For instance, a fixed or rotating shaft is provided on the extending portion 171, a groove matched with the shaft is provided on the first insulating bracket 130, and the shaft is inserted into the groove to achieve rotation. Alternatively, a fixed or rotating shaft may be provided on the first insulating bracket 130, a groove matched with the shaft may be provided at the root portion of the extending portion 171, and the shaft may be inserted into the groove to achieve rotation. Before the first cover plate 150 seals and is assembled with the casing 110, the extending portion 171 may first be in the first state of being flipped over or bent outwards, thereby providing sufficient space for the welding of the first tab 121 and the first terminal 160. When the welding is completed and it is necessary to rotate the first cover plate 150 to seal the first cover plate 150 on the first opening 111, the extending portion 171 may be turned over or bent to the second state that is approximately perpendicular to the plate surface of the first cover plate 150. Therefore, the extending portion 171 may be inserted into the inside of the side wall of the first insulating body 140 during the turning process to block the seam between the first insulating bracket 130 and the first insulating body 140. It should be noted that the root portion of the extending portion 171 may also be integrally connected to the first insulating bracket 130 in a non-bendable manner as shown in FIG. 22 and may also be provided outside the butt seam between the first insulating body 140 and the first insulating bracket 130 corresponding to the front side in the extending direction of the first tab free end. In this way, even if the first tab free end 1211 penetrates into the seam in front, it may be blocked by the extending portion.

With reference to FIG. 1, in the single battery 100 according to an embodiment of the disclosure, the first insulating bracket 130 includes a tab gathering structure 132 for gathering the first tab 121. As long as the first tab 121 may be positioned, the form of the tab gathering structure 132 may be in various forms. The tab gathering structure 132 in the disclosure includes a first protruding portion 1321 arranged on the other side opposite to the extending portion 171. The first protruding portion 1321 is connected to the first insulating bracket 130 and protrudes towards one side of the extending portion 171. The first tab receiving groove 131 is formed on the side of the first protruding portion 1321 close to the first cover plate 150. The first protruding portion 1321 enables the first tab 121 to be tightly fixed between the first insulating bracket 130 and the bottom plate 161 of the first terminal 160 when being folded and bent, thereby facilitating the welding of the first tab 121 to the bottom plate 161 of the first terminal 160.

With reference to FIG. 1 again, in another embodiment of the disclosure, the tab gathering structure 132 further includes a second protruding portion 1322 arranged on a side opposite to the first protruding portion 1321. The second protruding portion 1322 is connected to the first insulating bracket 130 and protrudes towards one side of the first protruding portion 1321. The second protruding portion 1322 is used to hold up the first tab free end 1211 to prevent the first tab free end 1211 from being inserted upside down and puncturing the separator of the electrode assembly. Certainly, a person having ordinary skill in the art can understand that if the superposition of the above beneficial effects is not considered, only the first protruding portion 1321 or the second protruding portion 1322 may be provided on the first insulating bracket 130.

Although the casing 110 in the disclosure may only have the first opening 111, in an embodiment of the disclosure, the casing 110 also includes a second opening. The second opening is opposite to the first opening 111 and is provided on the other side of the casing 110, so that an approximately rectangular parallelepiped channel with a bidirectional opening is formed on the casing 110. The single battery further includes a second cover plate (not shown). A structure of the second cover plate and an installation structure on the casing 110 may be set with reference to the structure of the negative side cover of the currently-available dual-pass battery 10 and may be the same as the structure of the first cover plate 150 in the disclosure, as long as the second cover plate can seal and package the second opening. In this embodiment, the form of the second cover plate packaging the second opening may be set with reference to the form of installation of the first cover plate 150 and the first opening 111. A second tab (not shown) extends from the other end of the electrode assembly 120 away from the first tab 121. Further, the polarity of the second tab and the first tab 121 are opposite, and the second tab is a negative tab. The second tab is electrically connected to the second cover plate or a terminal on the second cover plate. It should be noted that in other embodiments, the first tab 121 may also be a negative tab, and the second tab 121 may be a positive tab. A second insulating member and a second insulating bracket may also be arranged between the second cover plate and the electrode assembly 120. A structure of the second insulating member may be the same as that of the first insulating body 140, and the currently-available plastic structure under the negative electrode side may also be referred to. A structure of the second insulating bracket may be the same as that of the first insulating bracket 130, and the structure of the currently-available negative electrode side insulating bracket may also be referred to. Further, a person having ordinary skill in the art can understand that if the casing 110 serves as the negative electrode, the second insulating member and the second insulating bracket may not have to be provided.

It should be noted that in the disclosure, if the butt seam bending portion or the butt seam between the extending portion and recess portion is located outside the movable region of the first tab free end 1211, the butt seam may not have to be particularly defined. Ideally, a gap of butt seam is 0 mm. However, considering assembly interference and errors, in the disclosure, the gap within the butt seam (i.e., the butt seam bending portion) between the extending portion and the recess portion is 0.2 mm to 0.4 mm, for example, the gap may be any value between 0.2 mm to 0.4 mm, such as 0.2 mm, 0.3 mm, 0.4 mm, etc. A gap lower than 0.4 mm is not conducive to assembly, and a gap larger than 0.4 mm occupies the internal space of the cell, and the blocking effect of the tab cannot be ensured.

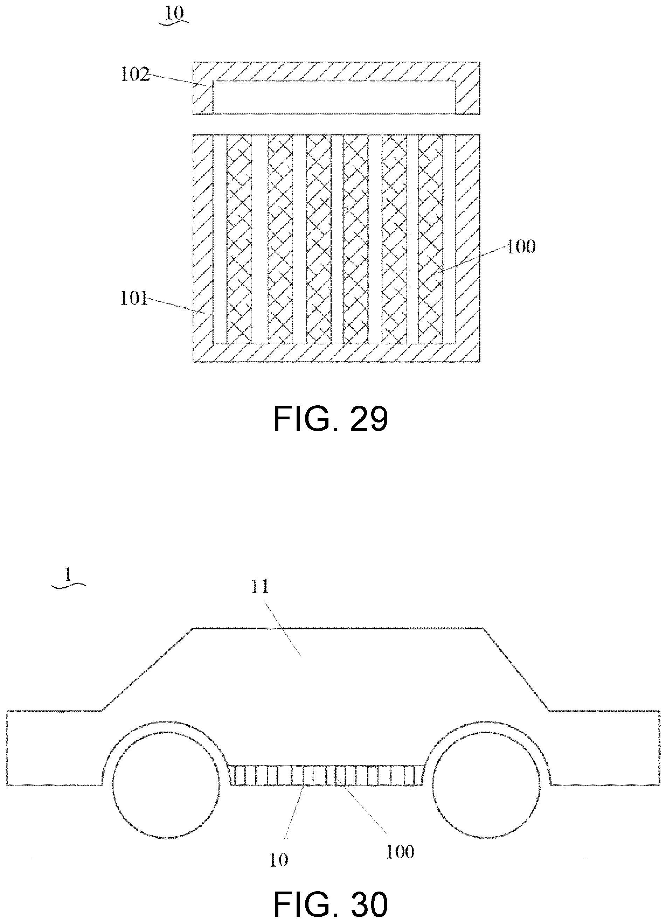

With reference to FIG. 29, the disclosure further provides a battery 10, and the battery 10 includes the single battery 100 according to any one of the above embodiments. The battery 10 may be a battery module, a battery block, or a battery pack, but it is not limited thereto. In an embodiment of the disclosure, the battery 10 includes a box body and at least one single battery 100. The box body includes a first box body 101 and a second box body 102. The first box body 101 and the second box body 102 cover each other to form an accommodating space, and a plurality of single batteries 100 are accommodated in the accommodating space. The plurality of single batteries 100 may be connected in series and/or in parallel.

With reference to FIG. 30, the disclosure further provides an electrical apparatus 1. The electrical apparatus 1 may be a vehicle, a mobile phone, a portable device, a notebook computer, a ship, a spacecraft, an electric toy, an electric tool, etc. The vehicle may be but not limited to a fuel vehicle, a gas vehicle, or a new energy vehicle, and the new energy vehicle may be a pure electric vehicle, a hybrid vehicle, or a range-extended vehicle, etc. The spacecraft includes but not limited to an airplane, a rocket, a space shuttle, a spaceship, etc. The electric toy includes but not limited to a stationary or mobile electric toy, for example, a game machine, an electric car toy, an electric boat toy, an electric airplane toy, etc. The electric tool includes but not limited to a metal cutting electric tool, a grinding electric tool, an assembling electric tool, and an electric tool for railway use, such as an electric drill, an electric grinder, an electric wrench, an electric screwdriver, an electric hammer, an impact drill, a concrete vibrator, an electric planer, etc.

In the disclosure, the electrical apparatus 1 includes a working portion 11 and the abovementioned battery 10. The working portion 11 is electrically connected to the battery 10 to obtain electrical energy support. The working portion 11 may be a unit component that can obtain the electric energy of the battery 10 and perform corresponding work, such as a blade rotating unit of a fan, a dust collection working unit of a vacuum cleaner, a wheel drive unit in an electric vehicle, etc. The above electrical apparatus 1 is not particularly limited in the embodiments of the disclosure.

In the electrical apparatus 1 according to an embodiment of the disclosure, the electrical apparatus 1 is a vehicle, the working portion 11 is the vehicle body, and the battery 10 is fixedly installed on the vehicle body to provide driving force for the vehicle and to achieve the operation of the vehicle.

In the single battery provided by the disclosure, the first insulating body and/or the first insulating bracket arranged on the front side in the extending direction of the first tab free end is provided with the tab blocked structure. On the one hand, the tab blocked structure may prevent the first tab free end from passing through the seam between the first insulating body and the first insulating bracket and prevent the first tab from contacting the casing. On the other hand, the extending portion may block the redundant first tab pieces, and tab cutting can no longer be performed. In this way, the production costs are reduced, and the safety performance of the battery is improved. The battery and the electrical apparatus of the disclosure include the single battery of the disclosure, so that improved safety performance is provided, and the production costs are reduced. Therefore, some practical problems in the related art are effectively overcome, so that the disclosure exhibits high utilization value and use significance.

## Claims

1. A single battery (100), comprising:
a casing (110) comprising a first opening (111);
a first cover plate (150) sealing and installed on the first opening (111);
a first terminal (160) installed on the first cover plate (150);
an electrode assembly (120) arranged in the casing (110) and having a first tab (121) extending from a side close to the first cover plate (150), the first tab (121) is fixedly connected to the first terminal (160) and is formed with a first tab free end (1211); and
a first insulating member (20) installed on a side of the first cover plate (150) close to the electrode assembly (120),
wherein the first insulating member (20) is provided with a tab blocked structure (170), a side of the first terminal (160) close to the electrode assembly (120) and the tab blocked structure (170) form a first accommodating space (190), the first accommodating space (190) is used to limit a movable range of the first tab free end (1211), and the casing (110) is located outside the first accommodating space (190).

2. The single battery (100) according to claim 1, wherein the tab blocked structure (170) is arranged on a front side in an extending direction of the first tab free end (1211).

3. The single battery (100) according to claim 1, wherein the first tab (121) comprises a plurality of stacked first tab pieces (1212), and free ends of the first tab pieces (1212) have an uneven end structure.

4. The single battery (100) according to claim 1, wherein the first insulating member (20) comprises a first insulating body (140) and a first insulating bracket (130) arranged between the first insulating body (140) and the electrode assembly (120), and the tab blocked structure (170) is arranged on the first insulating body (140) and/or the first insulating bracket (130) and is configured to block the first tab free end (1211) from passing through a gap between the first insulating body (140) and the first insulating bracket (130).

5. The single battery (100) according to claim 4, wherein the tab blocked structure (170) comprises a butt seam bending portion (173) arranged on a butt position of the first insulating body (140) and the first insulating bracket (130), wherein in a thickness direction of the first cover plate (150), a butt seam of the butt seam bending portion (173) is bent in a direction away from a contact surface (180) between the first tab (121) and the first terminal (160).

6. The single battery (100) according to claim 4, wherein on a front side in an extending direction of the first tab free end (1211), part or all of a butt seam between the first insulating body (140) and the first insulating bracket (130) is located outside a movable region of the first tab fee end.

7. The single battery (100) according to claim 1, wherein the tab blocked structure (170) comprises an extending portion (171) connected to the first insulating body (140) and/or the first insulating bracket (130) and extending to block a front side in an extending direction of the first tab free end (1211), and an extending end of the extending portion (171) extends beyond a movable region of the first tab free end (1211).

8. The single battery (100) according to claim 7, wherein a recess portion (172) is provided on the first insulating bracket (130) or the first insulating body (140) on a front side in an extending direction of the extending portion (171), and the extending end extends at least partially into the recess portion (172).

9. The single battery (100) according to claim 8, wherein in the extending direction of the first tab free end (1211), the recess portion (172) penetrates through a wall body of the corresponding first insulating body (140) or a wall body of the corresponding first insulating bracket (130), the extending portion (171) and the recess portion (172) butt together to form a butt seam bending portion (173), and in a thickness direction of the first cover plate (150), a butt seam of the butt seam bending portion (173) is bent in a direction away from a contact surface between the first tab (121) and the first terminal (160).

10. The single battery (100) according to claim 7, wherein the single battery (100) is a square-casing battery (10), the first tab free end (1211) is close to a large surface of the casing (110), the first insulating bracket (130) is provided with a first tab receiving groove (131), an orthographic projection of the extending portion (171) covers an orthographic projection of the first tab free end (1211) in a direction perpendicular to the large surface, and an orthographic projection of the first tab receiving groove (131) covers the orthographic projection of the extending portion (171).

11. The single battery (100) according to claim 1, wherein the first terminal (160) comprises a bottom plate (161) arranged on a side of the first cover plate (150) close to the electrode assembly (120) and welded and connected to the first tab (121).

12. The single battery (100) according to any one of claims 1 to 11, wherein the first insulating bracket (130) comprises a tab gathering structure (132) for gathering the first tab (121), the tab gathering structure (132) comprises a first protruding portion (1321) opposite to the extending portion (171), and the first protruding portion (1321) is connected to the first insulating bracket (130) and protrudes towards one side of the extending portion (171).

13. The single battery (100) according to any one of claims 1 to 11, wherein the casing (110) further comprises a second opening, the second opening and the first opening (111) are arranged on two sides of the casing (110) opposite to each other, the single battery (100) further comprises a second cover plate sealing and installed on the second opening, the electrode assembly (120) has a second tab extending from a side close to the second cover plate, and the second tab is conductively connected to the casing (110), the second cover plate, or a terminal on the second cover plate, wherein the first tab (121) is a positive tab and the second tab is a negative tab.

14. A battery (10), comprising the single battery (100) according to any one of claims 1 to 13.

15. An electrical apparatus (1), comprising the single battery (100) according to any one of claims 1 to 13.
